# FASCICULE DE BREVET EUROPEEN

(11) **EP 0 522 987 B1**
(45) Date de publication et mention de la délivrance du brevet: **24.05.1995**
(21) Numéro de dépôt: 92440085.6
(22) Date de dépôt: 09.07.1992
(51) Int. Cl.: B62B 1/20

(54) **Brouette ou dispositif de manutention similaire à châssis articulé, et procédé de gerbage correspondant**
Schubkarre oder gleichartiges Transportmittel mit Gelenkrahmen und Stapeleinrichtung
Wheelbarrow or similar material handling device with hinged chassis, and means for stacking same

(30) Priorité: 09.07.1991 FR 9108994
(43) Date de publication de la demande: 13.01.1993
(73) Titulaire: HAEMMERLIN S.A., F-67700 Monswiller (FR)
(72) Inventeur: Haemmerlin, Bernard, 67700 Saverne (FR)
(74) Mandataire: Nuss, Laurent

(56) Documents cités:
- WO-A-92/12035
- FR-A- 1 473 336
- FR-A- 2 523 058
- US-A- 2 838 319
- US-A- 3 722 904

## Description

La présente invention concerne le domaine des dispositifs de manutention, et plus particulièrement celui des brouettes, et a pour objet une brouette ou dispositif de manutention similaire à châssis articulé ainsi qu'un procédé de gerbage desdites brouettes ou desdits dispositifs de manutention.

Actuellement, le stockage et la livraison de brouettes ou de dispositifs de manutention similaires sont généralement réalisés selon deux modes de conditionnement différents, à savoir, soit en pièces détachées, rassemblées en kits dans des contenants ou stockées séparément par type de pièces, soit sous forme de dispositifs entièrement montés, prêts à l'emploi.

Or, chacun de ces deux modes de stockage et de livraison présente des inconvénients majeurs.

En effet, en cas de livraison en pièces détachées, le revendeur ou l'utilisateur, selon le cas, est obligé d'assembler, en plusieurs opérations de montage, l'ensemble desdites pièces, nécessitant souvent des outils et/ou des appareillages spécialisés ainsi qu'une expérience et une dextérité plus ou moins importantes. En outre, la qualité du montage et donc du produit monté dépend entièrement des facteurs précités.

Par ailleurs, le stockage de brouettes ou de dispositifs de manutention entièrement montés est très encombrant et génère, notamment, des frais de transport importants. De plus, un gerbage en grand nombre est difficile à réaliser et crée des piles de brouettes ou de dispositifs de manutention similaires très délicates à manipuler, notamment dans le cas d'une palettisation.

On connaît par le document WO-A-9212035, cité dans le présent mémoire en tant que document de l'art antérieur au titre de l'Article 54(3) et (4) de la CBE, une brouette pliable dont la caisse est articulée par rapport aux bras du brancard et dont le brancard est lui-même articulé par rapport au châssis roulant.

Cette double articulation permet de replier le brancard et le châssis support roulant dans la caisse de manière à obtenir un ensemble compact pour le transport et le rangement.

Le document US-A-3 722 904 décrit une brouette en deux parties comprenant, d'une part, une caisse partiellement repliable comportant trois plaques de fond et deux plaques latérales articulées entre elles et, d'autre part, un ensemble châssis roulant/brancard composé d'une pluralité de parties assemblées entre elles par des liaisons à pivot, permettant de replier ledit ensemble en une structure compacte et peu encombrante.

Cette dernière peut ensuite être disposée à l'intérieur du contenant formé par la caisse à l'état replié, en cas de transport ou de rangement.

En outre, le document US-A-2 838 319 montre un véhicule de manutention essentiellement constitué par une caisse montée sur des pieds et pourvue, d'une part, d'une roue avant repliable sous le fond de ladite caisse et, d'autre part, de deux poignées courtes rabattables le long des flancs de ladite caisse, permettant d'obtenir un encombrement réduit en vue de son rangement ou transport.

Ces trois documents ont en commun de proposer des brouettes, ou des véhicules de manutention similaires, qui peuvent être repliées sous une forme compacte, mais qui ne présentent aucune propriété particulière favorisant leur gerbage en grand nombre.

Par ailleurs, on connaît par le document FR-A-2 523 058 une brouette essentiellement constituée, d'une part, par un ensemble brancard/châssis d'un seul tenant et rigide et, d'autre part, par une caisse ou cuve destinée à être montée et fixée sur ledit ensemble.

Bien que de telles brouettes puissent aisément être stockées avec un faible encombrement, par empilement en petit nombre, elles présentent néanmoins une partie au moins des inconvénients des brouettes disponibles en kit (fixation de la caisse sur le châssis roulant) et n'autorisent pas un gerbage en très grand nombre du fait de la ségrégation des différents éléments constitutifs lors du gerbage et de l'instabilité résultant d'une dissociation des deux ensembles d'éléments constitutifs.

La présente invention a pour but de pallier tous les inconvénients précités à la page 1.

Elle a, en effet, pour objet une brouette ou un dispositif de manutention similaire, composé essentiellement d'une caisse et d'une structure support portant une ou plusieurs roues, ladite structure support étant principalement constituée par un brancard recevant la caisse et par un châssis roulant, comportant notamment l'élément support de la ou des roues et les pieds, caractérisé en ce que ledit châssis roulant est articulé par rapport à la caisse et au brancard, le châssis roulant est repliable par pivotement d'une position d'utilisation, dans laquelle il est situé sous la caisse et en appui contre cette dernière, vers une position de rangement et de stockage, dans laquelle il est essentiellement disposé entre les bras du brancard et dans le prolongement de ladite caisse, cette dernière et la structure support étant préassemblées.

L'invention a également pour objet un procédé de gerbage des brouettes ou dispositifs de manutention précités, caractérisé en ce qu'il consiste principalement à replier le châssis roulant articulé de ladite brouette ou dudit dispositif de manutention à empiler, de telle manière qu'il soit disposé essentiellement entre les bras du brancard et dans le prolongement de la caisse, puis à déposer ladite brouette ou ledit dispositif de manutention sur la pile existante, les caisses des différents éléments constituant ladite pile étant successivement emboîtées entre elles et les châssis roulants respectifs prenant appui successivement les uns sur les autres.

L'invention sera mieux comprise grâce à la description ci-après, qui se rapporte à un mode de réalisation préféré, donné à titre d'exemple non limitatif et expliqué avec référence aux dessins schématiques annexés, dans lesquels :
la figure 1 est une vue en perspective d'une brouette conforme à l'invention, en position repliée de non-utilisation, et,
la figure 2 est une vue en élévation latérale d'une pile de brouettes conformes à l'invention en cours de formation.

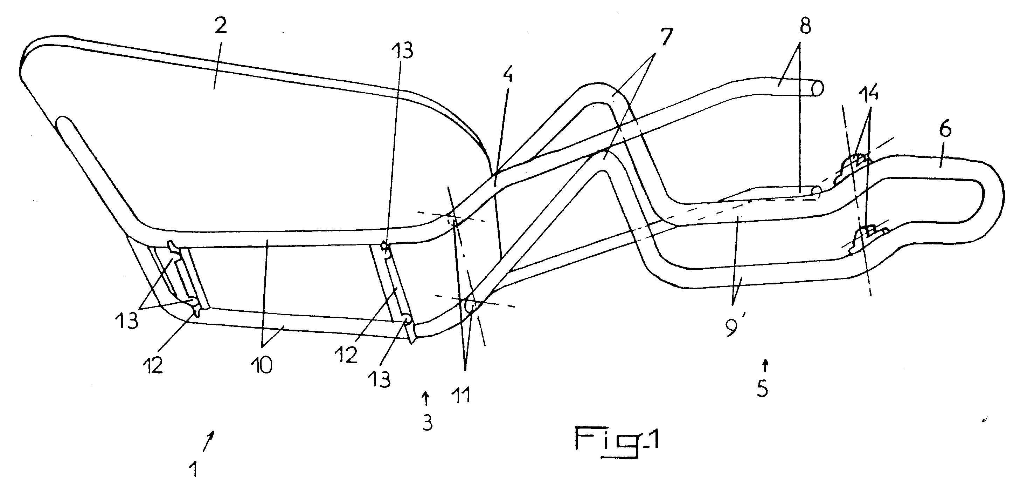

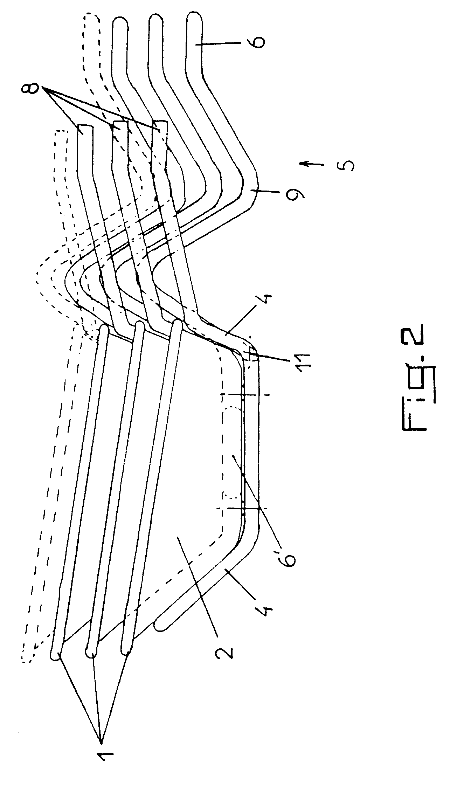

Comme le montrent les figures 1 et 2 des dessins annexés, la structure support 3 de la brouette 1 ou du dispositif de manutention similaire est principalement constituée par un brancard 4 recevant la caisse 2 et par un châssis roulant 5, comportant notamment l'élément support 6 de la ou des roues 6'et les pieds 7, ledit châssis roulant 5 étant articulé par rapport à la caisse 2 et au brancard 4.

Conformément à l'invention, et comme représenté notamment à la figure 2 des dessins annexés, le châssis roulant 5 est repliable par pivotement d'une position d'utilisation, dans laquelle il est situé sous la caisse 2 et en appui contre cette dernière, vers une position de rangement et de stockage, dans laquelle il est essentiellement disposé entre les bras 8 du brancard 4 et dans le prolongement de ladite caisse 2, cette dernière et la structure support 3 étant préassemblées, la disposition précitée permettant d'obtenir un élément de forme relativement plate de faible hauteur, aisément empilable, même en très grand nombre.

En position d'utilisation, l'appui du châssis roulant 5 sur le fond de' la caisse 2 s'effectue par l'intérmédiaire soit d'une partie coudée 9 (figure 2) soit, préférentiellement, d'une partie rectiligne 9' (figure 1).

Le châssis roulant 5 est, en position d'utilisation, de manière préférentielle, situé entièrement à l'intérieur d'un espace délimité latéralement par les longerons 10 du brancard 4, les points de pivotement 11 dudit châssis roulant 5 étant disposés à l'extrémité arrière desdits longerons 10 (figure 1 et 2).

Conformément à une caractéristique de l'invention, non représentée aux dessins annexés, le châssis roulant 5 est verrouillé, en position d'utilisation, au moyen d'au moins un dispositif de clippage.

Néanmoins, il est également possible, par exemple, de visser ledit châssis roulant 5 au fond de la caisse 2 ou sur les longerons 10 du brancard 4.

Comme le montre la figure 1 des dessins annexés, le brancard 4 comporte des traverses de renforcement 12 disposées contre le fond de la caisse 2 et pourvues de découpes 13 de réception du châssis roulant 5 en position d'utilisation.

L'invention a également pour objet un procédé de gerbage des brouettes ou des dispositifs de manutention préassemblés précités, représenté à la figure 2 des dessins annexés et consistant à replier le châssis roulant 5 articulé de ladite brouette 1 ou dudit dispositif de manutention à empiler de telle manière qu'il soit disposé essentiellement entre les bras 8 du brancard 4 et dans le prolongement de la caisse 2, puis à déposer ladite brouette 1 ou ledit dispositif de manutention sur la pile existante, les caisses 2 des différents éléments 1 constituants ladite pile étant successivement emboîtés entre elles et les châssis roulants 5 respectifs prenant appui successivement les uns sur les autres.

Selon une caratéristique supplémentaire de l'invention, le procédé consiste, en outre, avant mise en place de la brouette 1 ou du dispositif de manutention suivant d'une pile, à déposer dans la caisse 2 de l'élément 1 disposé en dernier sur ladite pile, la roue 6' qui lui correspond.

Grâce à l'invention, il est donc possible de réaliser une brouette 1 ou un dispositif de manutention similaire, presque entièrement préassemblé - le seul montage restant à effectuer étant celui de la roue 6' au niveau des paliers 14 du support de roue 6 - pouvant être configuré, par simple pivotement du châssis roulant 5, en une structure plate, de faible hauteur, pouvant être gerbée en très grand nombre, tout en constituant des piles dont la stabilité et la rigidité sont élevées.

## Revendications

1. Brouette ou dispositif de manutention similaire, composé essentiellement d'une caisse et d'une structure support portant une ou plusieurs roues, ladite structure support (3) étant principalement constituée par un brancard (4) recevant la caisse (2) et par un châssis roulant (5) comportant notamment l'élément support (6) de la ou des roues (6') et les pieds (7), caractérisé en ce que ledit châssis roulant (5) est articulé par rapport à la caisse (2) et au brancard (4), le châssis roulant (5) est repliable par pivotement d'une position d'utilisation, dans laquelle il est situé sous la caisse (2) et en appui contre cette dernière, vers une position de rangement et de stockage, dans laquelle il est essentiellement disposé entre les bras (8) du brancard (4) et dans le prolongement de ladite caisse (2), cette dernière et la structure support (3) étant préassemblées.

2. Brouette ou dispositif de manutention similaire, selon la revendication 1, caractérisé en ce que le châssis roulant (5) est, en position d'utilisation, situé entièrement à l'intérieur d'un espace délimité latéralement par les longerons (10) du brancard (4), les points de pivotement (11) dudit châssis roulant (5) étant disposés à l'extrémité arrière desdits longerons (10).

3. Brouette ou dispositif de manutention, selon l'une quelconque des revendications 1 et 2, caractérisé en ce que le châssis roulant (5) est verrouillé, en position d'utilisation, au moyen d'au moins un dispositif de clippage.

4. Brouette ou dispositif de manutention similaire, selon l'une quelconque des revendications 1 à 3, caractérisé en ce que le brancard (4) comporte des traverses de renforcement (12) disposées contre le fond de la caisse (2) et pourvues de découpes (13) de réception du châssis roulant (5) en position d'utilisation.

5. Procédé de gerbage de brouettes ou de dispositifs de manutention similaires préassemblées, selon l'une quelconque des revendications 1 à 4, caractérisé en ce qu'il consiste à replier le châssis roulant (5) articulé de ladite brouette (1) ou dudit dispositif à empiler, de telle manière qu'il soit disposé entre les bras (8) du brancard (4) et dans le prolongement de la caisse (2), puis à déposer ladite brouette (1) ou ledit dispositif de manutention sur la pile existante, les caisses (2) des différents éléments (1) constituant ladite pile étant successivement emboîtés entre elles et les châssis roulants (5) respectifs prenant appui successivement les uns sur les autres.

6. Procédé selon la revendication 5, caractérisé en ce qu'il consiste, avant mise en place de la brouette (1) ou du dispositif de manutention suivant d'une pile, à déposer dans la caisse (2) de l'élément disposé en dernier sur ladite pile, la roue (6') qui lui correspond.

## Claims

1. Wheelbarrow or similar handling device, essentially composed of a box and a support structure carrying one or more wheels, the said support structure (3) consisting principally of a frame (4) receiving the box (2) and of a running chassis (5) notably including the member (6) supporting the wheel or wheels (6') and the feet (7), characterised in that the said running chassis (5) is articulated with respect to the box (2) and the frame (4), the running chassis (5) can be folded up by pivoting from a utilisation position, in which it is situated under the box (2) and bearing against the latter, to a parking and storage position, in which it is essentially disposed between the arms (8) of the frame (4) and in line with the said box (2), the latter and the support structure (3) being pre-assembled.

2. Wheelbarrow or similar handling device according to Claim 1, characterised in that the running chassis (5) is, in the utilisation position, situated entirely within a space defined laterally by the longitudinal members (10) of the frame (4), the pivot points (11) of the said running chassis (5) being disposed at the rear end of the said longitudinal members (10).

3. Wheelbarrow or handling device according to either one of Claims 1 and 2, characterised in that the running chassis (5) is locked, in the utilisation position, by means of at least one clipping means.

4. Wheelbarrow or similar handling device according to any one of Claims 1 to 3, characterised in that the frame (4) has reinforcing crossbars (12) disposed against the base of the box (2) and provided with cut-outs (13) for receiving the running chassis (5) in the utilisation position.

5. Stacking method for wheelbarrows or similar pre-assembled handling devices according to any one of Claims 1 to 4, characterised in that it consists of folding up the articulated running chassis (5) of the said wheelbarrow (1) or of the said device to be stacked, in such a manner that it is disposed between the arms (8) of the frame (4) and in line with the box (2), and then placing the said wheelbarrow (1) or the said handling device on the existing stack, the boxes (2) of the different elements (1) forming the said stack being successively inserted in each other and the respective running chassis (5) bearing successively on each other.

6. Method according to Claim 5, characterised in that it consists, before the positioning of the wheelbarrow (1) or of the following handling device in a stack, of placing in the box (2) belonging to the last element disposed on the said pile the wheel (6') that corresponds to it.

## Patentansprüche

1. Schubkarre oder gleichartiges Transportmittel, bestehend im wesentlichen aus einer Wanne und einem ein oder mehrere Räder tragenden Stützrahmen, wobei dieser Stützrahmen (3) im wesentlichen gebildet ist durch einen die Wanne (2) aufnehmenden Tragrahmen (4) und durch ein Fahrgestell (5), das insbesondere das Stützelement (6) des oder der Räder (6') und die Stützen (7) umfaßt,
dadurch gekennzeichnet, daß
das Fahrgestell (5) gelenkig bezüglich der Wanne (2) und des Tragrahmens (4) angeordnet ist und das Fahrgestell (5) durch Verschwenken von einer Gebrauchsstellung, in der es unter der Wanne (2) diese abstützend angeordnet ist, zu einer Aufbewahrungs- und Lagerungsstellung klappbar ist, in der es im wesentlichen zwischen den Armen (8) des Tragrahmens (4) und in der Verlängerung der Wanne (2) angeordnet ist, wobei letztere und der Stützrahmen (3) vormontiert sind.

2. Schubkarre oder gleichartiges Transportmittel nach Anspruch 1, dadurch gekennzeichnet, daß das Fahrgestell (5) in der Gehrauchsstellung vollständig im Innern eines seitlich von den Längstragern (10) des Tragrahmens (4) begrenzten Raumes angeordnet ist, wobei die Schwenkpunkte (11) des Fahrgestelles (5) am rückwärtigen Ende der Längsträger (10) angeordnet sind.

3. Schubkarre oder Transportmittel nach einem der Ansprüche 1 und 2, dadurch gekennzeichnet, daß das Fahrgestell (5) in Gebrauchsstellung mittels wenigstens einer Klammereinrichtung verriegelt ist.

4. Schubkarre oder gleichartiges Transportmittel nach einem der Ansprüche 1 bis 3, dadurch gekennzeichnet, daß der Tragrahmen (4) Verstärkungstraversen (12) umfaßt, die gegen den Boden der Wanne (2) angebracht sind und Ausschnitte (13) zur Aufnahme des Fahrgestells (5) in Gebrauchgstellung aufweisen.

5. Verfahren zum Stapeln von Schubkarren oder gleichartigen vormontierten Transportmitteln nach einem der Ansprüche 1 bis 4, dadurch gekennzeichnet, daß es umfaßt: das Klappen des an dem Schubkarren (1) oder der zu stapelnden Vorrichtung angebrachten Fahrgestells (5) in der Weise, daß es zwischen den Armen (8) des Tragrahmens (4) und in der Verlängerung der Wanne (2) angeordnet ist, dann das Anordnen des Schubkarrens (1) oder der Transportvorrichtung auf dem bestehenden Stapel, wobei die Wannen (2) der verschiedenen, den Stapel bildenden Elemente (1) nacheinander zwischen sie eingreifen und die jeweiligen Fahrgestelle (5) sich nacheinander aufeinander abstützen.

6. Verfahren nach Anspruch 5, dadurch gekennzeichnet, daß es darin besteht, vor Anordnen der Schubkarre (1) oder des Transportmittels zu einem Stapel in der Wanne (2) des zuletzt auf dem Stapel angeordneten Teiles das dementsprechende Rad (6') abzulegen.
